# EUROPEAN PATENT APPLICATION

(11) **EP 1 225 523 A2**
(43) Date of publication of application: **24.07.2002**
(21) Application number: 01129595.3
(22) Date of filing: 12.12.2001
(51) Int. Cl.: G06F 17/50

(54) **Designing method and design assist system**

(30) Priority: 27.12.2000 JP 2000396725
(71) Applicant: TOYOTA JIDOSHA KABUSHIKI KAISHA, Aichi-ken 471-8571 (JP)
(72) Inventor: Sakamoto, Sunao, Toyota Jidosha Kabushiki Kaisha, Toyota-shi, Aichi-ken 471-8571 (JP); Kitagawa, Naoto, Toyota Jidosha Kabushiki Kaisha, Toyota-shi, Aichi-ken 471-8571 (JP); Goto, Tomoaki, Toyota Jidosha Kabushiki Kaisha, Toyota-shi, Aichi-ken 471-8571 (JP); Terazawa, Toshihisa, Toyota Jidosha Kabushiki K., Toyota-shi, Aichi-ken 471-8571 (JP)
(74) Representative: Leson, Thomas Johannes Alois, Dipl.-Ing.

(57) **Abstract**

In a method of designing a product with the aid of a computer, design-related requirement information is registered and stored in a server (15) as an electronic file created in a predetermined format, and design specifications of the product is also stored in the server. The server automatically retrieves requirement information relating to the design specifications, from the design-related requirement information stored in the server, and the content of the automatically retrieved requirement information is presented to a designer via the server. The designer then creates detailed design information based on the design specifications, while checking the content of the requirement information presented.

## Description

### BACKGROUND OF THE INVENTION

### 1. Field of the Invention

The invention relates to a designing method, i.e., a method of designing a product with the aid of a computer, and a design assist system that assists a user in a design process.

### 2. Description of Related Art

Design work for development of a new vehicle is carried out by a team including, for example, project staff, and members or engineers of a design division, a manufacturing division, a test division, a parts manufacturer(s) that supply parts, and the like. More specifically, the design division works out a detailed design for each portion of the vehicle, and the manufacturing division governs operations at an actual manufacturing site through, for example, plant and production management. The test division carries out evaluation tests on the designed vehicle or designed portion of the vehicle. The development of the new vehicle proceeds from its start to the start of production, by going through the stages as follows:

### (I) Planning Stage:

In the initial planning stage, basic concepts, such as a design and required performance or capabilities, of a new vehicle are determined, and a development plan is established. Also, design specifications of each design part of the vehicle are created based on the basic concepts. The design part is a portion of the vehicle that is to be designed.

### (II) Design Stage:

A design engineer of the design division determines details of design according to the design specifications created in the planning stage, and creates a design drawing or drawings of the design part.

### (III) Evaluation Stage:

The design drawing created in the design stage is then evaluated by the manufacturing division, the test division, or the like. In these divisions, it is determined whether the design drawing created in the design stage satisfies the design specifications, through analysis of the design drawing, prototype modeling, evaluation test(s), or the like. In the case where an outside parts manufacturer, or the like, is entrusted with supply or manufacture of the part in question, similar evaluation is carried out by a relevant division of the parts manufacture. If any problem is found in the design drawing in the evaluation stage, the design engineer is requested to make a design change. Such design changes and evaluation of the modified design drawing are repeated until the resulting design drawing sufficiently meet the design specifications. In this manner, the design drawing is completed.

### (IV) Production Preparation Stage:

Once the design drawing is completed, production preparation is arranged, and production is started according to the design drawing thus prepared.

With regard to the development of a new vehicle, or any product in general, there is an increasing demand for reduction in the development time (i.e., the time required for the development) in accordance with reduction in the life cycle of the product. Accordingly, it is desired to reduce design changes in the evaluation stage as described above.

If the design drawing created in the design stage involves only few problems, in other words, if the design drawing is created with a high degree of perfection, the design changes in the evaluation stage can be naturally reduced. To create a design drawing with a high degree of perfection, however, the design engineer is required to have a wide range of technical knowledge, including knowledge of manufacturing technology, and a high technical skill. With the greatly improved level of technology and a tendency of upsizing of the development, it becomes quite difficult for the design engineer or engineers to acquire a high technical skill or a high level of knowledge in all aspects.

In the meantime, a design assist system as disclosed in, for example, Japanese Patent Laid-open Publication No. 8-106494 is known as a system for managing the progress of a design process associated with development of a new product, with the aid of a computer. The development of a new product may be achieved with improved efficiency within a reduced time, by utilizing the design assist system in an appropriate manner and optimizing the distribution of human resources, and the like. However, this system does not solve the problem as described above.

### SUMMARY OF THE INVENTION

It is therefore an object of the invention to provide a designing method and a design assist system, which permit development of a product to be accomplished with improved efficiency within a reduced development time.

To accomplish the above and/or other object(s), there is provided according to a first aspect of the invention, which provides a method of designing a product with the aid of a computer, comprising the steps of: (a) registering and storing design-related requirement information in a server as an electronic file created in a predetermined format, (b) preparing design specifications of the product, (c) causing the server to automatically retrieve requirement information relating to the prepared design specifications, from the design-related requirement information stored in the server, (d) presenting a content of the automatically retrieved requirement information to a designer via the server, and (e) allowing the designer to check a content of the requirement information presented, and create detailed design information based on the design specifications.

In the designing method as described above, the designer or design engineer creates detailed design information, based on design specification information. The "design specification information" used herein means information relating to a design concept or concepts before specifying details, which information may cover required performance and a design concept. The "detailed design information" as indicated above means design information that specifies design to such an extent that the product can be actually manufactured, with the shapes and dimensions of detailed portions determined based on the design specifications. For example, the detailed design information is in the form of a design drawing used for manufacturing.

According to the designing method as described above, prior to creation of the detailed design information, requirement information relating to the design specifications is automatically retrieved by the server from the information stored in the server, and the content of the retrieved information is presented to the designer. The design-related requirement information mean information about points to be considered during creation of the detailed design information, for example, standards of respective elements or parts, restrictions, demands or requests, and agreements associated with designing. The designer checks or examines the content of the requirement information, and creates the detailed design information, referring to the requirement information.

Accordingly, the designer is able to create the detailed design information so that the created detailed design reflects the content of the requirement information stored in the server. Since the design-related requirement information is stored in the server such that the information can be easily retrieved and recognized, it is possible for the designer and other members involved in the design process to share technical knowledge and know-hows necessary for designing. Therefore, the detailed design information can be produced with a high level of perfection, requiring a reduced number of design changes. Consequently, the overall design work can be accomplished with further improved efficiency, and the time required for development of the product can be thus reduced.

In the method according to the first aspect of the invention, information about a problem in design and information about a solution to the problem may be acquired as the requirement information, and the acquired requirement information may be registered in the server as an electronic file created in a predetermined format.

In the method as described just above, each time a problem arises in detailed design, the information about the problem and information about a solution(s) to the problem are stored in the server as the requirement information. With this method, the designer is able to create detailed design information while referring to or checking the design problems that occurred in the past and the solutions to the problems. It is thus possible to effectively prevent similar design problems from occurring again. Furthermore, the designer and other associated members are able to share know-hows obtained through the problems as described above.

In the method according to the first aspect of the invention, the design specifications may be presented to at least one evaluating person in charge of design evaluation, prior to creation of the detailed design information by the designer. Then, information about design-related requests made by the evaluating person(s) based on the design specifications presented may be acquired as the requirement information, which is registered in the server as an electronic file created in a predetermined format.

In the above case, the design specifications are presented in advance to the evaluating person(s) who will evaluate the design information created by the designer and who is/are selected from a manufacturing division, such as a plant or a production management division, and/or a test division, for example. The evaluating persons then present information relating to their requests made based on the content of the design specifications presented, and register the information in the server as the requirement information. Thus, prior to creation of the detailed design information, the requests made by the evaluating persons are presented to the designer for consideration.

Accordingly, the designer is able to create detailed design information so that the resulting detailed design reflects the requests made by the evaluation person(s). Namely, the request made by the evaluating person(s) can be incorporated into design, and later design changes can be effectively reduced.

According to a second aspect of the invention, there is provided a system for assisting creation of detailed design information based on design specifications, which includes (a) a server that manages transmission of information via a computer network, and (b) a database provided under control of the server for containing design-related requirement information that is recorded as an electronic file in a predetermined format. In this system, the server automatically retrieves the design-related requirement information relating to the design specifications from the database, and presents a content of the retrieved information to a user.

In the design assist system as described above, the design-related requirement information is recorded in an electronic file of a predetermined format, and is registered in the database under control of the server. On the basis of design specifications information prepared as an electronic file of a certain format, the server automatically retrieves requirement information relating to the design specifications in question, from the information registered in the database, so that the content of the retrieved information is presented to the user (e.g., designer).

With the above arrangement, the requirement information registered in the database can be easily referred to and easily reflected by detailed design information that is created based on the design specifications. Thus, technical knowledge necessary for designing can be easily shared among the designer and other members (e.g., engineers) involved in the design process. Accordingly, the detailed design information can be created with an improved level of perfection, requiring a reduced number of design changes. Consequently, the overall design work can be accomplished with further improved efficiency, and the time required for development of the product can be thus reduced.

In the design assist system according to the second aspect of the invention, the requirement information may include information about a design-related problem which is acquired upon occurrence of the problem, and information about a solution to the design-related problem.

In the system as described just above, each time a problem arises in design, the information about the problem and information about a solution(s) to the problem are stored in the server as the requirement information. The requirement information obtained in this manner can also be easily retrieved in association with the design specifications. It is thus possible to effectively prevent similar design problems from occurring again. Furthermore, the designer and other associated members are able to share know-hows obtained through the problems as described above.

In the design assist system according to the second aspect of the invention, the requirement information may further include information about design-related requests made by at least one evaluating person in charge of design evaluation based on the design specifications presented to the at least one evaluating person.

In the design assist system as described just above, the information on the requests made by the evaluating person(s) with respect to the design in question is registered, and is presented to the designer in association with the design specifications. Accordingly, the designer can create detailed design information so that the detailed design reflects the requests made by the evaluating person(s), whereby design changes can be effectively reduced.

### BRIEF DESCRIPTION OF THE DRAWINGS

The foregoing and/or further objects, features and advantages of the invention will become more apparent from the following description of preferred embodiments with reference to the accompanying drawings, in which like numerals are used to represent like elements and wherein:
Fig. 1 is a schematic view showing the overall construction of a design assist system according to one preferred embodiment of the invention;
Fig. 2 is a time chart showing the proceeding of a development project; and
Fig. 3 is a flowchart showing a process of retrieving requirement files from a requirement database.

### DETAILED DESCRIPTION OF PREFERRED EMBODIMENTS

An exemplary embodiment of the invention when applied to designing for development of a new vehicle, such as an automobile, will be described in detail with reference to the accompanying drawings.

Design work for the development of a new vehicle is carried out by a team including, for example, project staff, and members or engineers of a design division, a parts manufacturing division or manufacturing division, a test division, and related divisions, such as parts manufacturers, which manufacture and supply parts, and the like. More specifically, detailed design information, such as a design drawing, for each part of the vehicle is created in the design division, and the part thus designed, or the like, is tested and evaluated in the test division. The manufacturing division may be in the form of a production management division or a plant serving as an actual manufacturing site where parts are manufactured and assembled together.

The above-indicated project staff plays a center role in the development project, and performs overall management of the development project. The project staff includes selected members from the respective divisions associated with the development of the new vehicle. With the project staff thus constructed by the selected members from the respective divisions, it becomes easier to reach agreements and share information among the different divisions, in relation to the development project.

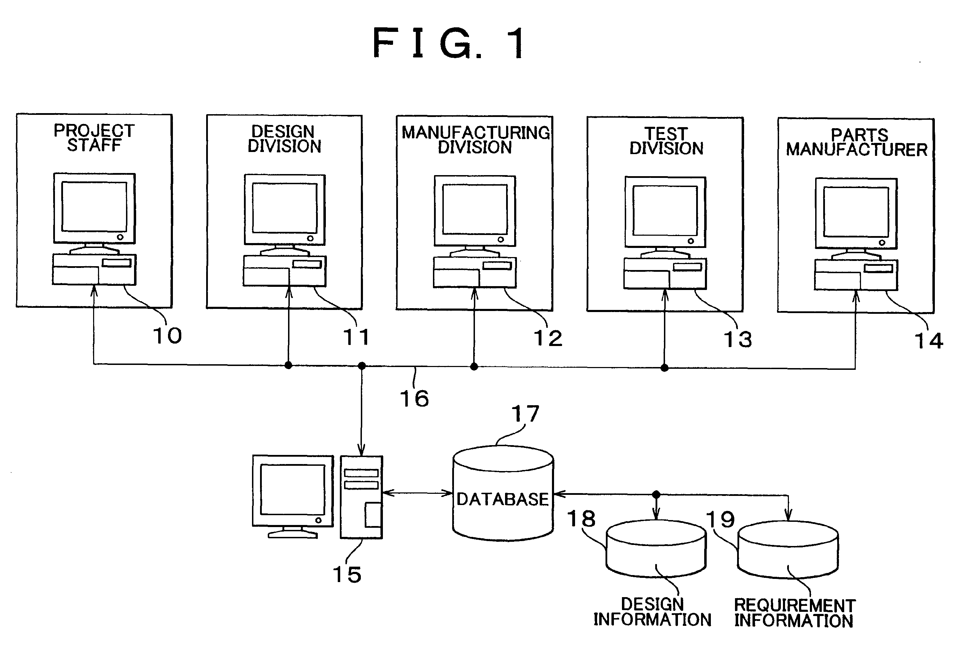

Fig. 1 shows the configuration of a design assist system for assisting in design for development of a new vehicle. As shown in Fig. 1, the system includes computer terminals 10, 11, 12, 13, 14 provided in a project staff room and the respective divisions, and a server 15 that is in charge of management of various types of information pertinent to the new vehicle development. The terminals 10-14 and server 15 are connected to each other via a network 16.

The server 15 manages information transmitted between the server 15 and the respective terminals 10-14 via the network 16, and is provided with a database 17 in which various types of information relating to designing for the new vehicle development is registered. The server 15 also functions as a mail server, and manages transmission of electronic mails among the project staff members and the members of the respective divisions.

The database 17 includes two databases, namely, a design information database 18 and a requirement database 19. The design information database 18 contains information in the form of a design drawing created by the design division, and information in the form of evaluation test results obtained in the test division.

The requirement database 19 contains information in the form of design-related requirements, which are registered or stored as an electronic file in a predetermined format. The "design-related requirements" mean information about points to be considered in terms of design, for example, standards of respective elements or parts, restrictions, demands or requests, and agreements associated with designing. In the designing method according to this embodiment, information about such requirements are added to and registered in the requirement database 19 each time a development project is carried out, as described later, so that the database 19 contains an increased amount of useful information.

Each of the terminals 10-14 has a display function for displaying various information registered in the respective databases 18, 19, and enables a user to retrieve or acquire the information via the server 15 and confirm the content of the retrieved information on the corresponding terminal 10-14. Thus, the requirement file registered in the requirement database 19 can be displayed on each of the terminals 10-14, so that the user can confirm the content of the information.

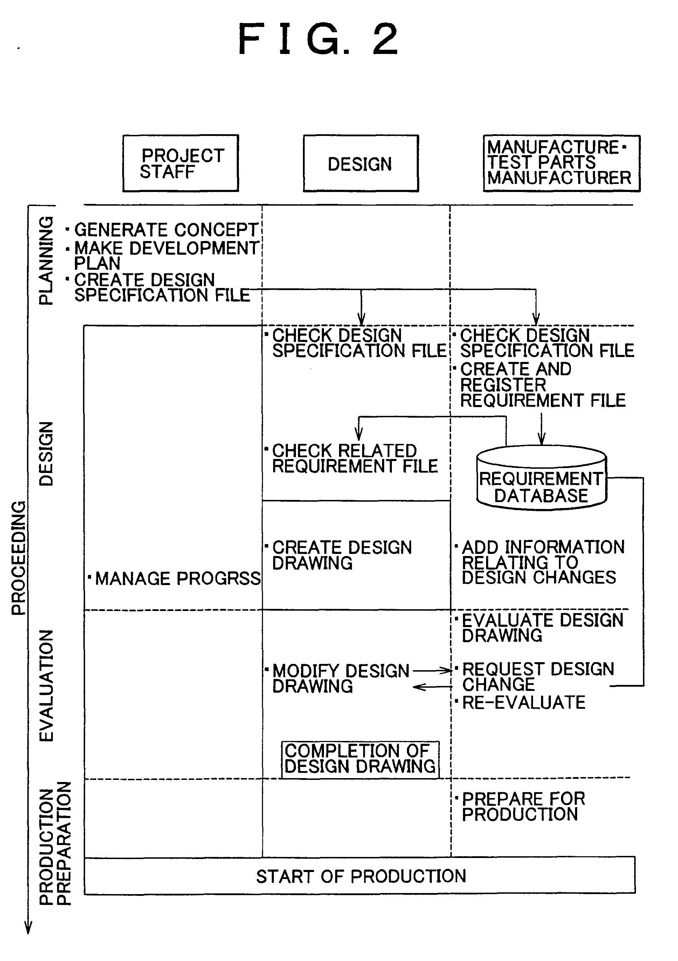

Next, a process of implementing the development project using the design assist system constructed as described above will be explained with reference of Fig. 2.

Fig. 2 is a time chart showing the process of implementing the development project according to the present embodiment of the invention. As shown in Fig. 2, the development project proceeds in the manner as described below.

### (I) Planning Stage

In the planning stage, the project staff members and others carry out planning and conception of a product (e.g., a new vehicle) to be developed.

Initially, the project staff lays out development concepts, such as the overall performance and design of the product to be developed. On the basis of the development concepts, the project staff cooperates with members of the design division and manufacturing division to define design requirements for respective portions of the vehicle, and determine design specifications for each portion of the vehicle. Information on the thus determined design specifications is converted into electronic information, which is recorded in an electronic file in a predetermined format and is thus registered in the design information database 18.

The "information on the design specifications" means collective information on general (i.e., non-detailed) design requirements, such as required performance, and approximate shapes and dimensions of parts of the vehicle. On the other hand, "detailed design information" as describer later means design information, such as a design drawing, obtained by determining the dimensions and shapes (profiles) of detailed portions of the vehicle. The vehicle may be actually produced based on the detailed design information.

In the planning stage, the project staff makes a development plan, such as assignment of development team members to each portion of the vehicle for which design specifications are determined, and a detailed schedule of designing. Here, the team members assigned to each portion of the vehicle (each design part) for which the design specifications are determined are selected from the design division, and are also selected from the manufacturing division, test division, and the relevant parts manufacturer. Namely, each design part is designed by a design team that consists of a member or members of the design division who actually creates a design drawing, and members of the respective divisions that evaluate the design drawing.

The above-described operations are performed in the planning stage. The project staff mainly functions to manage the progress, or the like, of development operations in the following stages.

### (II) Design Stage

In the design stage, the detailed design information, i.e., the design drawing, pertinent to each design part is created by the design team composed of the members as described above, in the manner as described below.

Initially, each of the members of the design team checks the content of the design specifications of the design part in question, which specifications are provided as a specification file (electronic file). The information recorded in the specification file can be displayed on the terminal 11-14 of each member of the design team so that the content of the information can be checked by the team member, as described above.

In this step, each of the team members studies or analyzes the content of the design specifications recorded in the specification file, and lists requirements relating to design of the design part in question. Then, a requirement file is created by recording the requirements in an electronic file in a predetermined format, and is registered in the requirement database 19. In this manner, the information on the design-related requirements, which is newly derived from the analysis of the design specifications, is formed into electronic information, which is then added to and registered in the requirement database 19.

The information on the requirements thus registered includes possible cases where problems are expected to occur, problems pertinent to the design specifications, and information that lacks in the design specifications. The requirement information also includes pieces of information based on technical knowledge or experiences provided by engineers, such as those of the manufacturing division, test division, and the parts manufacturers, other than design engineers of the design division. These pieces of information are very useful in creating a design drawing of the design part in question.

The requirement information also includes information that is generally useful in terms of designing, as well as information specific to or pertinent to each design part. Such general information is also registered and stored in the requirement database 19, so that the information can be used again later.

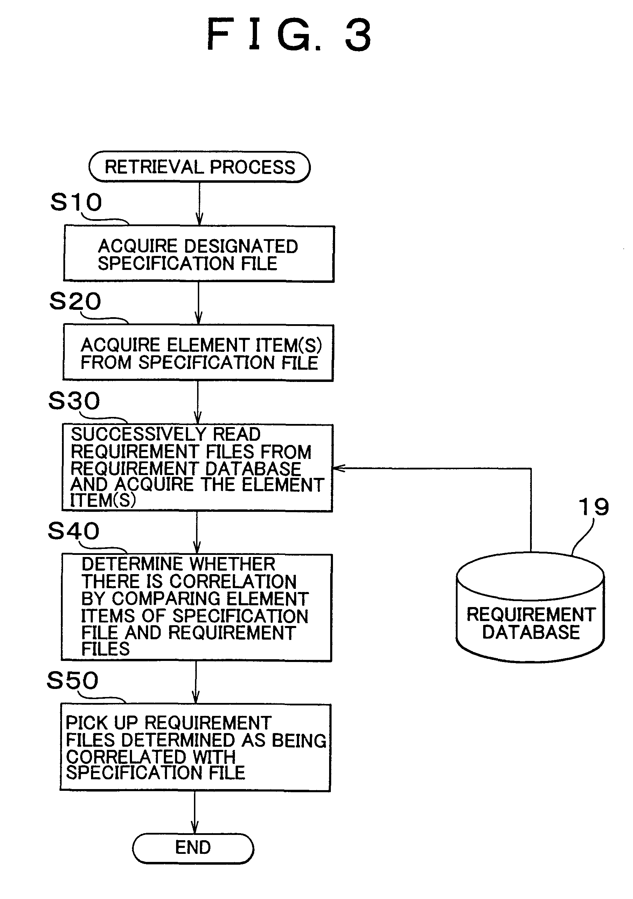

Subsequently, the design engineer in charge of creation of detailed design information, i.e., a design drawing, reads requirement information associated with the design part to which the engineer is assigned, from the requirement database 19, and checks the content of the information. The server 15 functions to extract or retrieve desired requirement information, in the manner as described in detail below with reference to Fig. 3.

In step S10 of Fig. 3, the server 15 acquires a specification file containing design specifications for which requirement information is to be extracted, in accordance with designation of the file. In this embodiment, the specification file can be designated on each of the terminals 10-14. The design engineer normally designate a desired specification file on his/her own terminal 11.

In step S20, the server 15 acquires element items relating to the content of the specification file, from the specification file acquired in step S10. The element items may be selected from items that specify or characterize the design part in question, for example, the name of the design part and/or the type of vehicle in which the design part is employed.

Subsequently, the server 15 successively acquires requirement files from the requirement database 19, and acquires element items from the requirement files in step S30 in a similar manner. Then, the server 15 compares the element items obtained from the requirement files with the element items obtained from the specification file, and determines whether there is any correlation between the element items in the specification file and those in the requirement files in step S40. This process is carried out with respect to all of the files in the database 19, and requirement files that have been judged as relating to the designated specification file are picked up or retrieved in step S50. In this manner, the process of retrieving desired requirement information is accomplished.

In the present embodiment as described above, the server 15 automatically acquires element items from the specification file, and retrieves or picks up related requirement files based on the element items as retrieval conditions. It is, however, possible for the design engineer, or the like, to designate or select retrieval conditions so as to retrieve desired requirement information. In any event, requirement information, which has been converted into electronic information, is recorded in the form of electronic files of a predetermined format, and the electronic files are stored in the database 19 so that the server 15 can easily and appropriately carry out the retrieval process.

After the retrieval process as described above is performed, the design engineer checks the content of the requirement information thus retrieved, and creates the design drawing in view of the requirement information.

### (III) Evaluation Stage

In the evaluation stage, the design drawing created in the design stage is evaluated by the manufacturing division, the test division, and/or the parts manufacturer. Here, the evaluation is carried out by checking if the design drawing meets the design specifications, or checking if no problem will arise in the manufacture of the design part according to the design drawing.

If any problem is recognized in the design drawing, the design engineer modifies the design drawing so as to change the design. The modified design drawing is then re-evaluated. Thus, design changes are repeated until no problem is found in the design drawing. In this manner, the design drawing that describes detailed design information useful for actual production of the design part is completed.

It is to be noted that various design requirements can be derived from the problems or undesirable situations that require design changes. It is thus possible to avoid the same problems as experienced in the past, by utilizing the design requirements thus derived.

For this purpose, the situations or cases in which any problem is found in the design in the evaluation stage are analyzed, and information on the problems and solutions to the problems is recorded in the form of a requirement file, which is then added to and registered in the requirement database 19. The registration operation for registering all of the problems found in one development project may be performed at a time after the development project is finished.

### (IV) Production Preparation Stage

Once the design drawing is completed, preparation for the production of the design part is started mainly by the manufacturing division. Then, the production of the design part is started at a point of time when the preparation is accomplished.

The details of the design process for new-vehicle development according to the present embodiment of the invention have been described above.

In the illustrated embodiment, as the development project proceeds, the following information (a), (b) are registered as requirement information in the requirement database 19.
(a) Information on design requirements made by a person in charge of evaluation of the design upon check of the design specifications.
(b) Information on design problems that required design changes in the evaluation stage, and solutions to the problems.

The above information includes various know-hows, technical knowledge and other information relating to design, which are useful in creating a design drawing for the design part in question. Thus, if the design drawing is created with these pieces of information taken into consideration, the resulting design drawing achieves an improved level of perfection, thus requiring reduced design changes. With the information (a) taken into account, in particular, the requirements made by the evaluation engineer with respect to the design part in question can be incorporated in advance into the design drawing by the design engineer, and therefore the possibility of design changes can be effectively reduced. Also, by utilizing the information (b) as indicated above, the design drawing created in the current development project can effectively reflect the know-hows that have been developed through experiences in the past development projects.

Furthermore, in the illustrated embodiment, the above-described information is extracted or picked up during the actual design process, and is recorded into and accumulated in the requirement database 19. Thus, the information stored in the requirement database 19 is increased as the number of development projects increases.

The above-described embodiment of the invention yields advantageous effects as follows.
(1) In the illustrated embodiment, the information about requirements relating to design of a certain design part of a new vehicle is stored in the requirement database 19 as an electronic file of a predetermined format, and the design engineer can check the content of the information stored in the database 19. It is therefore possible to share, among the members concerned, various technical knowledge and know-hows relating to the design, which are represented by the requirement information stored in the requirement database 19.
(2) In the illustrated embodiment, the design engineer creates a design drawing while checking the content of related requirement information retrieved from the requirement database 19. Accordingly, the design drawing can be created with a high level of perfection, while reflecting the technical knowledge and know-hows based on the information stored in the database 19. Consequently, the design is less likely to be changed, resulting in an improved efficiency in the product development, and reduced time required for the development.
(3) In the illustrated embodiment, prior to creation of the design drawing, the content of the design specifications is presented to a person in charge of evaluation of the design, who is then supposed to list requirements pertinent to the design. Then, the design engineer creates the design drawing while taking account of the design requirements. The design drawing thus created can reflect the design requirements derived based on the expert knowledge and experiences of the evaluation engineer, and therefore design changes can be effectively reduced.
(4) In the illustrated embodiment, the information on the design requirements listed by the person in charge of evaluation based on the design specifications is registered in the requirement database 19 as requirement information. Thus, the information stored in the database 19 can be re-used as desired. Also, the quantity and quality of the information stored in the database 19 can be further increased and improved.
(5) In the illustrated embodiment, information on design problems, if any, that actually required design changes and information on solutions to the problems are registered as requirement information in the requirement database 19. Thus, the database 19 is further supplied with the useful information, and problems similar to the above problems can be effectively prevented from occurring again.
(6) In the illustrated embodiment, the requirement information is extracted during the actual design process, and the thus extracted information is registered so that the information stored in the requirement database 19 is supplemented with the newly extracted information. It is thus easy to construct a design assist database that is helpful in designing a vehicle part.

The above-described embodiment may be modified in the manners as follows:
(1) The details of a process of extracting requirement information as described above with respect to the illustrated embodiment may be changed as desired. For example, requirement files that are more accurately related to a design process in question may be extracted by employing a suitable search logic. Furthermore, it may be determined whether a certain requirement file is correlated with a certain specification file while adopting a logic for evaluating the degree of correlation therebetween. In this case, a range of the requirement files to be extracted from the requirement database 19 may be designated as desired based on the logic, so that desired information can be more efficiently acquired. In any event, the requirement information, which is converted into electronic information, is stored as electronic files of a predetermined format, so that the above extracting process can be automated, and design of a vehicle part can be easily accomplished.
(2) In the illustrated embodiment, design-related requirement information is captured and is registered in the requirement database 19, upon preliminary review of design specifications by the person in charge of evaluation of design, or upon occurrence of a problem(s) in design in the evaluation stage. The manner of capturing and registering the information is not limited to that of the illustrated embodiment, but may be changed as desired. In sum, the requirement database 19 stores requirement information that will assist in creating detailed design information, in such a manner that the content of the information can be readily checked or recognized. The use of such information ensures an improved level of perfection of detailed design information (e.g., design drawing) thus created, and reduces later design changes. If the requirement information is captured during the design process in accordance with a predetermined design procedure, the information can be easily gathered, and a design assist database containing the requirement information can be easily constructed.
(3) While the system is constructed such that the server 15 manages various information relating to design in a concentrated manner in the illustrated embodiment, the system configuration may be changed as needed. For example, the system may be constructed such that distributed management of the information is performed by a plurality of servers, or the like, that are connected to each other via a computer network. In this case, too, the advantageous effects as described above with respect to the illustrated embodiment can be obtained provided that the information is sure to be shared by the plural servers.
(4) The designing method and the design assist system according to the invention may be applied to all fields of design, and are by no means limited to design for development of a new vehicle as illustrated in the above embodiment.

In a method of designing a product with the aid of a computer, design-related requirement information is registered and stored in a server (15) as an electronic file created in a predetermined format, and design specifications of the product is also stored in the server. The server automatically retrieves requirement information relating to the design specifications, from the design-related requirement information stored in the server, and the content of the automatically retrieved requirement information is presented to a designer via the server. The designer then creates detailed design information based on the design specifications, while checking the content of the requirement information presented.

## Claims

1. A method of designing a product with the aid of a computer, comprising the steps of:
registering and storing design-related requirement information in a server (15) as an electronic file created in a predetermined format;
preparing design specifications of the product;
causing the server to automatically retrieve requirement information relating to the prepared design specifications, from the design-related requirement information stored in the server;
presenting a content of the automatically retrieved requirement information to a designer via the server; and
allowing the designer to check a content of the requirement information presented, and create detailed design information based on the design specifications.

2. The method according to claim 1, further comprising:
acquiring, upon occurrence of a problem in design, information about the problem and information about a solution to the problem, as the requirement information, and registering the acquired requirement information in the server as an electronic file of the predetermined format.

3. The method according to claim 2, wherein it is determined that the problem has occurred when a design change is required in an evaluation stage in which the detailed design information is evaluated.

4. The method according to any one of claims 1-3, further comprising:
presenting the design specifications to at least one evaluating person in charge of design evaluation, prior to creation of the detailed design information by the designer; and
acquiring information about design-related requests made by the at least one evaluating person based on the design specifications presented, as the requirement information, and registering the acquired requirement information in the server as an electronic file of the predetermined format.

5. The method according to claim 4, wherein the at least one evaluating person comprises at least one member selected from a manufacturing division, a test division and a parts manufacturer.

6. The method according to any one of claims 1-5, wherein the server stores information about the design specifications of the product as an electronic file created in a predetermined format.

7. The method according to claim 6, further comprising:
retrieving the information about the design specifications of the product from the server and presenting the design specifications to at least one evaluating person in charge of design evaluation, prior to creation of the detailed design information by the designer; and
acquiring information about design-related requests made by the at least one evaluating person based on the design specifications presented, as the requirement information, and registering the acquired requirement information in the server as an electronic file created in a predetermined format.

8. The method according to any one of claims 1-7, wherein the requirement information includes information that is useful in designing in general.

9. A system for assisting creation of detailed design information based on design specifications, comprising:
a server (15) that manages transmission of information via a computer network; and
a first database (19) provided under control of the server, the first database containing design-related requirement information that is recorded as an electronic file in a predetermined format,
wherein the server automatically retrieves the design-related requirement information relating to the design specifications from the first database, and presents a content of the retrieved information to a user.

10. The system according to claim 9, further comprising:
a second database (18) provided under control of the server, the second database containing information about the design specifications that is recorded as an electronic file in a predetermined format.

11. The system according to claim 9 or claim 10, wherein the requirement information includes information about a design-related problem which is acquired upon occurrence of the problem, and information about a solution to the design-related problem.

12. The system according to any one of claims 9-11, wherein the requirement information further includes information about design-related requests made by at least one evaluating person in charge of design evaluation based on the design specifications presented to the at least one evaluating person.

13. The system according to claim 12, wherein the at least one evaluating person comprises at least one member selected from a manufacturing division, a test division and a parts manufacturer.

14. The system according to any one of claims 9-13, wherein the requirement information includes information that is useful in designing in general.
